# DEMANDE DE BREVET EUROPEEN

(11) **EP 0 562 946 A1**
(43) Date de publication de la demande: **29.09.1993**
(21) Numéro de dépôt: 93400743.6
(22) Date de dépôt: 23.03.1993
(51) Int. Cl.: F16H 3/16, F16H 63/30

(54) **Dispositif de commande de marche arrière de boîte de vitesses à baladeurs**

(30) Priorité: 24.03.1992 FR 9203496
(71) Demandeur: REGIE NATIONALE DES USINES RENAULT S.A., F-92109 Boulogne Billancourt (FR)
(72) Inventeur: Bremaud, Jean, F-78180 Montigny-Le-Bretonneux (FR)

(57) **Abrégé**

Dispositif de commande de marche arrière de boîte de vitesses à baladeurs, comportant un arbre d'entrée de mouvement (1) qui porte plusieurs pignons d'entraînement de vitesses de marche avant, (3, 4, 5, 6, 7) et un pignon d'entraînement de marche arrière (8), un arbre de sortie de mouvement (2) parallèle à l'arbre d'entrée (1) qui porte plusieurs pignons fous (9, 10, 11, 12, 13) engrenant en permanence avec les pignons d'entraînement de marche avant et un ensemble de baladeurs (14, 15, 16) qui peuvent être déplacés en translation par des axes coulissants (30, 31, 32) de façon à engager les différents pignons fous (9, 10, 11, 12, 13) avec l'arbre de sortie (2), pour obtenir les rapports de marche avant, caractérisé en ce que l'engagement de la marche arrière est assuré à l'aide d'un pignon mobile de transmission de marche arrière (24), solidaire d'un baladeur (16) d'engagement de rapport de marche avant.

## Description

La présente invention se rapporte aux boites de vitesses mécaniques, dites à baladeurs, comportant deux arbres parallèles, dans les quelles le premier arbre ou arbre d'entrée de mouvement porte un certain nombre de pignons d'entraînement de vitesses engrenant en permanence avec des pignons correspondants, montés fous sur le second arbre, ou arbre de sortie de mouvement.

De façon classique , ce type de boîte de vitesses comporte un organe de sélection et d'engagement des vitesses, destiné à coopérer sélectivement avec des coulisseaux de commande des vitesses de marche avant et de marche arrière. Le plus souvent, un déplacement angulaire de cet organe permet l'engagement du rapport sélectionné,l'engagement de la marche arrière étant assuré par la mise en prise d'un pignon solidaire d'un baladeur de marche avant, avec un pignon solidaire d'un arbre de boîte parallèle à l'arbre de sortie de mouvement.

Dans de nombreuses boîtes de vitesses connues, la course de commande du pignon mobile assurant l'engagement de la marche arrière est approximativement le double de la course de déplacement d'un baladeur, pour engager un rapport de marche avant. Cette disposition, imposée par la nécessité de prévoir une garde suffisante pour protéger l'ensemble du mécanisme de changement de vitesses contre le risque d'un engrènement indésiré du pignon mobile de marche arrière avec le pignon solidaire du baladeur, empêche d'utiliser l'organe de sélection et d'engagement des vitesses de marche avant pour commander directement l'engagement de la marche arrière. Une solution classique pour surmonter de telles difficultés de commande, consiste à interposer un levier de renvoi multiplicateur entre le coulisseau et le pignon mobile de marche arrière.

La publication FR 2511460 de la demanderesse propose une solution particulièrement appropriée à ces problèmes de commande de marche arrière dans une boîte de vitesses à baladeurs. Cette publication décrit notamment un dispositif de commande de marche arrière, comportant deux baladeurs, dont le premier permet l'engagement des premier et second rapport de marche avant, tandis que le second contrôle le passage des troisième et quatrième rapport de marche avant, en réponse à la rotation d'un organe de sélection et d'engagement des vitesses. Un des deux baladeurs de la boîte est pourvu d'un pignon de transmission de marche arrière qui est situé dans le même plan que le pignon d'entraînement de marche arrière porté par l'arbre d'entrée, lorsque ce baladeur et en position de point mort. L'engagement de la marche arrière est assuré par un pignon mobile de renvoi de marche arrière, engrenant à cet effet avec le pignon d'entraînement de marche arrière, en réponse au déplacement en translation d'un coulisseau de commande, cette translation résultant de la rotation de l'organe de sélection et d'engagement des vitesses, selon un angle équivalent à celui de l'engagement des rapports de marche avant. Toutefois avec un tel dispositif, l'engagement de la marche arrière nécessite une course de déplacement de son coulisseau de commande, sensiblement égale au double de celle d'un coulisseau de marche avant. Le dispositif décrit dans ce document, particulièrement adapté au cas d'un boîte de vitesses à quatre rapports de marche avant, permet notamment de renoncer au levier de renvoi multiplicateur, interposé entre le coulisseau de commande et le pignon mobile de marche arrière, dans de nombreuses boîtes de vitesses connues. Toutefois, ce dispositif ne permet pas de renoncer au doublement de la course d'engagement du coulisseau de marche arrière.

La présente invention a pour objet un dispositif de commande de marche arrière simplifié, évitant de recourir à un levier de renvoi surmultiplicateur entre le coulisseau de commande et le pignon mobile de transmission de marche arrière, et particulièrement adapté à une boîte de vitesses à cinq rapports de marche avant.

Elle concerne un dispositif de commande de marche arrière de boîte de vitesses à baladeurs, comportant un arbre d'entrée de mouvement qui porte plusieurs pignons d'entraînement de vitesses de marche avant, et un pignon d'entraînement de marche arrière, un arbre de sortie de mouvement parallèle à l'arbre d'entrée qui porte plusieurs pignons fous, engrenant en permanence avec les pignons d'entraînement de marche avant, et un ensemble de baladeurs qui peuvent être déplacés en translation par des axes coulissants de façon à engager les différents pignons fous avec l'arbre de sortie, pour obtenir les rapports de marche avant. Ce dispositif est caractérisé en ce que l'engagement de la marche arrière est assuré à l'aide d'un pignon mobile de transmission de marche arrière, solidaire d'un baladeur d'engagement de rapport de marche avant.

Selon un mode de réalisation de l'invention, l'engagement de la marche arrière est assuré par l'entraînement du pignon de transmission à partir d'un pignon de renvoi solidaire d'un arbre d'inversion de mouvement, parallèle aux arbres d'entrée et de sortie de mouvement.

Selon un mode de réalisation de l'invention, le pignon de renvoi est immobile en translation sur l'arbre d'inversion, et engrène en permanence avec le pignon d'entraînement de marche arrière.

Selon un mode de réalisation de l'invention, le baladeur supportant le pignon de transmission de marche arrière étant en position de non engagement, ce pignon est décalé latéralement du pignon de renvoi d'une distance correspondant à la course d'engagement des baladeurs pour l'engagement de toutes les vitesses de marche avant.

Selon un mode de réalisation de l'invention, le dispositif de commande de marche arrière comporte un levier assurant la commande de la sélection et de l'engagement de toutes les vitesses de marche avant et de la marche arrière, par l'intermédiaire d'un doigt de manoeuvre commun, coopérant à cet effet avec le crabot solidaire de l'axe coulissant sélectionné.

Selon un mode de réalisation de l'invention, le déplacement en translation du levier de commande place le doigt de manoeuvre en face du crabot sélectionné, et le déplacement en rotation du même levier et du même doigt de manoeuvre assure l'engagement d'une vitesse grâce à un déplacement en translation du baladeur sélectionné.

Selon un mode de réalisation de l'invention, la rotation du levier de commande assurant l'engagement de la marche arrière, s'effectue selon un angle équivalent à celui de l'engagement des rapports de marche avant.

Selon un mode de réalisation de l'invention, la course du baladeur déplacé pour engager la marche arrière est équivalente à celle de l'engagement des rapports de marche avant.

Selon un mode de réalisation de l'invention, le baladeur supportant le pignon de transmission de marche arrière est le baladeur d'engagement du cinquième rapport de marche avant.

Selon un mode de réalisation de l'invention, le dispositif de commande de marche arrière est associé à l'un des trois crabots respectivement solidaires de trois axes coulissants, actionnant respectivement un premier baladeur d'engagement des premier et second rapports de marche avant, un second baladeur d'engagement des troisième et quatrième rapport de marche avant, et un troisième baladeur d'engagement du cinquième rapport de marche avant et de la marche arrière.

La présente invention sera mieux comprise à la lecture de la description suivante d'un mode de réalisation particulier de celle-ci, en liaison avec les dessins annexés, sur lesquels :
- la figure 1 est une vue en coupe transversale partielle d'une boîte de vitesses à cinq rapports de marche avant et un rapport de marche arrière, équipée du dispositif de commande de marche arrière de l'invention,
- la figure 2 est une coupe suivant A-A de la figure 1, et
- la figure 3 est une vue en coup suivant B-B de la figure 2.

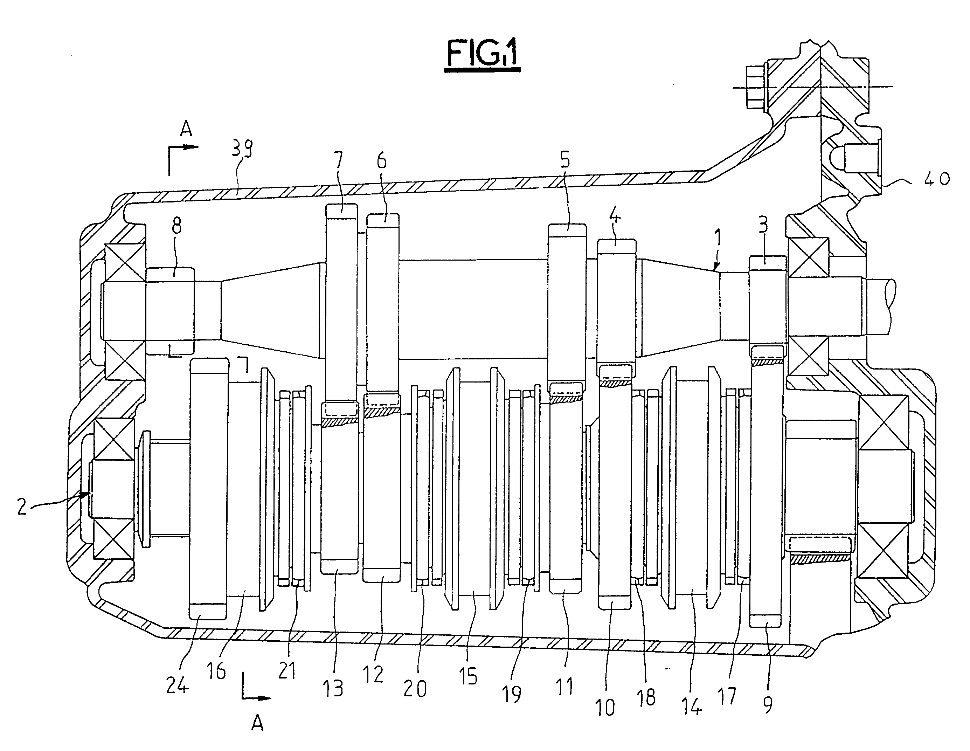

La boîte de vitesses représentée sur la figure 1 comprend, à l'intérieur d'un carter 39, un premier arbre 1, ou arbre d'entrée de mouvement 1, et un second arbre 2, ou arbre de sortie de mouvement 2, parallèle au premier. L'arbre d'entrée 1, pénétrant au travers du carter d'embrayage 40, et entraîné à son extrémité droite par l'embrayage de la transmission ( non représenté ), porte cinq pignons d'entraînement de marche avant 3, 4, 5, 6, et 7, correspondant respectivement à cinq rapports de marche avant, ainsi qu'un pignon d'entraînement de marche arrière 8. Ces pignons 3, 4, 5, 6, 7, et 8 sont fixés sur l'arbre d'entrée 1, et engrènent en permanence avec autant de pignons 9, 10, 11, 12 et 13, montés fous sur l'arbre de sortie 2. Les pignons fous, de marche avant (9, 10, 11, 12, 13) peuvent être engagés sur l'arbre de sortie 2, à l'aide de trois baladeurs 14, 15, et 16, montés dans des synchroniseurs doubles. Les trois baladeurs 14, 15, 16, qui peuvent être de type quelconque, coopèrent respectivement avec les crabots 17, 18, des pignons 9 et 10, avec les crabots 19 et 20 des pignons 11 et 12, et avec le crabot 21 du pignon 13, pour accoupler les différents pignons fous de marche avant 9, 10, 11, 12 13 avec l'arbre de sortie 2, de la boîte, selon le rapport de marche avant engagé.

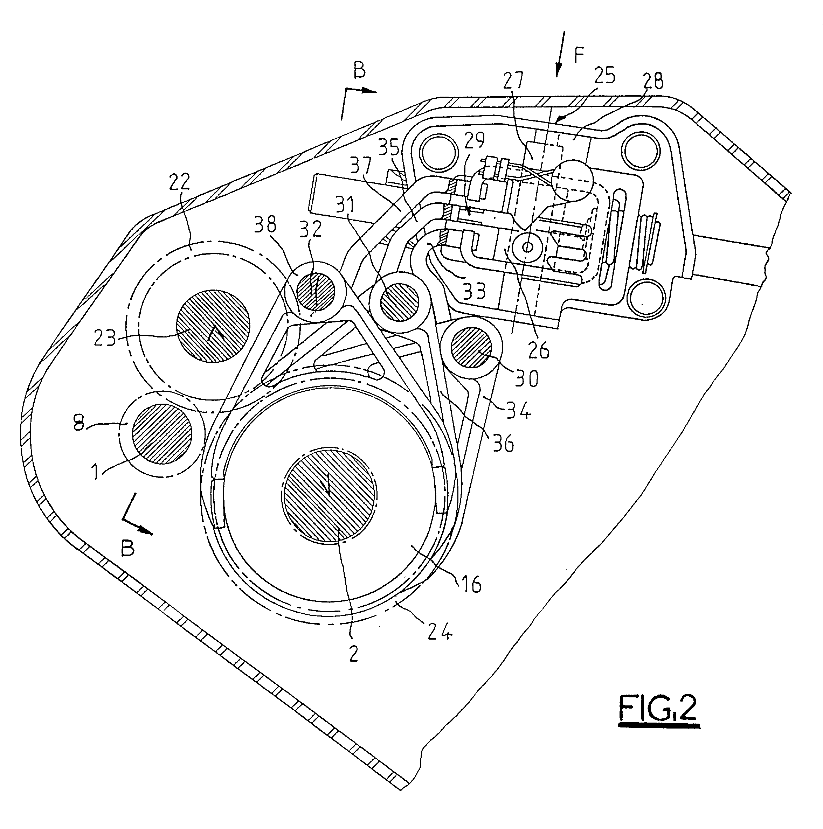

Sur la figure 2, on retrouve, en coupe, l'arbre d'entrée 1, l'arbre de sortie 2, ainsi qu'un arbre d'inversion de marche arrière 23, parallèle aux deux premiers. Le plan de coupe passe par le troisième baladeur 16, mais en arrière de celui-ci, apparaissent les trois fourchettes 34, 36, 38 de commande des baladeurs 14, 15, 16. Ces trois fourchettes sont fixées sur trois axes coulissants 30, 31, 32 respectivement solidaires de trois crabot 33, 35 et 37. Les pignons mentionnés sur la figure 2 sont les suivants : le pignon 8, d'entraînement du rapport de la marche arrière, fixé sur l'arbre d'entrée 1, le pignon de transmission de marche arrière 24 monté sur le baladeur 16 d'engagement du cinquième rapport de marche avant, et le pignon de renvoi de marche arrière 22, monté sur l'arbre d'inversion de marche arrière 23.

Dans la partie supérieure de la figure 2, on a représenté et désigné dans son ensemble par la référence 25, l'organe de sélection et d'engagement des vitesses. Cet organe 25 comporte un levier de commande 26, monté coulissant et tournant sur un axe 27 solidaire d'un support 28, fixé sur le carter d'embrayage 40. Un doigt de manoeuvre 29, solidaire du levier de commande 26, est destiné à déplacer en translation à l'intérieur du carter de boîte 39, les axes coulissants 30, 31, de commande des quatre premiers rapports de vitesses de marche avant, et l'axe de commande 32, du cinquième rapport de marche avant, et de la marche arrière. Sur la figure 2, l'organe de sélection et d'engagement des rapports 25, est représenté en position de point mort. Dans cette position, le doigt de manoeuvre est engagé dans le crabot 35, lié à la fourchette 36 de commande du baladeur 15 des troisième et quatrième rapport de marche avant, sans qu'un de ces deux rapports ne soit engagé.

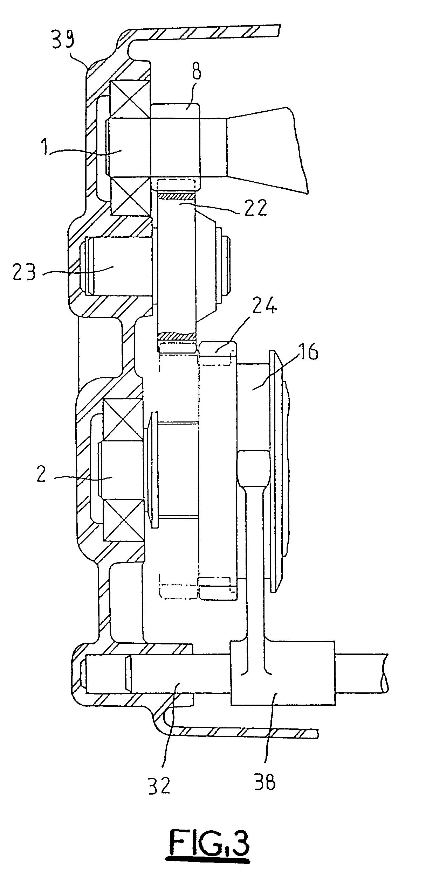

La coupe de la figure 3 met en évidence la structure du dispositif de commande de marche arrière de l'invention. Le pignon d'entraînement de marche arrière 8, porté par l'arbre d'entrée de mouvement 1, est en prise avec le pignon de renvoi de marche arrière 22, porté par l'arbre d'inversion de marche arrière 23. Le pignon de transmission de marche arrière 24, porté par l'arbre de sortie 2, et monté sur le baladeur 16, de commande du cinquième rapport de marche avant et de la marche arrière , est déporté latéralement à droite du pignon de renvoi 22. Dans cette situation, la marche arrière n'est pas engagée. La fourchette 38, engagée dans la gorge 16' du baladeur 16, est portée par l'axe coulissant 32.

Le fonctionnement de ce dispositif est le suivant. La sélection d'un axe de commande vitesse 30, 31 ou 32, est assurée par le déplacement en translation du levier de commande 26 , tandis que l'engagement d'un rapport est assuré, après l'opération de sélection, par un déplacement angulaire de ce même levier 26. Par translation du levier de commande 26 dans le sens de la flèche F de la figure 2, le doigt de commande 29 peut être engagé dans le crabot 3 3 de l'axe coulissant 30 de commande du baladeur 14, ce dernier étant en position de non engagement. En revanche, par translation du levier 26 dans une direction opposée à la flèche F, le doigt de commande 29, peut être engagé dans le crabot 37 de l'axe coulissant de commande 32, du baladeur 16, ce dernier étant en position de non engagement. Le baladeur 14 permet l'engagement des premier et second rapport de marche avant, le second baladeur 15 celui des troisième et quatrième rapports de marche avant, et le troisième baladeur 16, celui du cinquième rapport de marche avant et de la marche arrière. L'engagement d'une vitesse est assuré par la translation d'un baladeur, résultant d'un mouvement de rotation déterminé du doigt de manoeuvre 29, communiqué à ce dernier par un déplacement en rotation du levier 26 de l'organe 25 de sélection et d'engagement des vitesses.

La marche arrière est sélectionnée au point mort par une course de translation du levier de commande 26, équivalente à la course de sélection des rapports de marche avant, qui engage le doigt de manoeuvre dans le crabot 37 solidaire de l'axe coulissant 32. La marche arrière est engagée par la rotation du doigt 29, communiquée à celui-ci par une rotation du levier 26. Cet engagement est assuré par une rotation du levier 26 et du doigt 29, équivalente à celle de l'engagement des rapports de marche avant.

Une caractéristique essentielle de l'invention est que cette rotation se traduit par une course de translation de l'axe de commande 32, équivalente aux courses d'engagement des axes 30, 31 ou 32, pour les rapports de marche avant. Cette course permet au pignon de transmission de marche arrière 24, de couvrir la distance de garde qu'impose sa disposition sur le baladeur 16, puis de couvrir sa course d'engagement effectif avec le pignon de renvoi 22, tout risque d'engrènement de ces deux pignons, lorsque le baladeur 16 est en position de non engagement, étant évité.

## Revendications

**1)** Dispositif de commande de marche arrière de boîte de vitesses à baladeurs, comportant un arbre d'entrée de mouvement (1) qui porte plusieurs pignons d'entraînement de vitesses de marche avant, (3, 4, 5, 6, 7) et un pignon d'entraînement de marche arrière (8), un arbre de sortie de mouvement (2) parallèle à l'arbre d'entrée (1) qui porte plusieurs pignons fous (9, 10,11, 12, 13) engrenant en permanence avec les pignons d'entraînement de marche avant et un ensemble de baladeurs (14, 15, 16) qui peuvent être déplacés en translation par des axes coulissants (30, 31, 32) de façon à engager les différents pignons fous (9, 10, 11, 12, 13) avec l'arbre de sortie (2), pour obtenir les rapports de marche avant, caractérisé en ce que l'engagement de la marche arrière est assuré par l'intermédiaire d'un pignon de renvoi (22) engrenant en permanence avec le pignon d'entraînement de marche arrière (8) et immobile en translation sur un arbre d'inversion de mouvement (23) parallèle aux arbres d'inversion d'entrée et de sortie de mouvement (1, 2).

**2)** Dispositif de commande de marche arrière selon la revendication 1, caractérisé en ce que le baladeur (16) supportant le pignon de transmission de marche arrière (24) étant en position de non engagement, ce pignon (24) est décalé latéralement du pignon de renvoi (22), d'une distance correspondant à la course d'engagement des baladeurs (14, 15, 16) pour l'engagement de toutes les vitesses de marche avant.

**3)** Dispositif de commande de marche arrière selon les revendications 1 ou 2, caractérisé en ce qu'il comporte un levier (26) assurant la commande de la sélection et de l'engagement de toutes les vitesses de marche avant et de la marche arrière, par l'intermédiaire d'un doigt de manoeuvre (29) commun coopérant à cet effet avec le crabot (33, 35, 37) solidaire de l'axe coulissant (30, 31, 32) sélectionné.

**4)** Dispositif de commande de marche arrière selon la revendication 3, caractérisé en ce que le déplacement en translation du levier de commande (26) place le doigt de manoeuvre (29) en face du crabot (33, 35, 37) sélectionné, et en ce que le déplacement en rotation du même levier (26) et du même doigt de manoeuvre (29) assure l'engagement d'une vitesse grâce à un déplacement en translation du baladeur (14, 15, 16) sélectionné.

**5)** Dispositif de commande de marche arrière selon la revendication 4, caractérisé en ce que la rotation du levier de commande (26) assurant l'engagement de la marche arrière s'effectue selon un angle équivalent à celui de l'engagement des rapports de marche avant.

**6)** Dispositif de commande de marche arrière selon la revendication 5, caractérisé en ce que la course du baladeur (16) déplacé pour engager la marche arrière est équivalente à celle de l'engagement des rapports de marche avant.

**7)** Dispositif de commande de marche arrière selon l'une quelconque des revendications précédentes, caractérisé en ce que le baladeur (16) supportant le pignon de transmission de marche arrière (24) est le baladeur d'engagement du cinquième rapport de marche avant.

**8)** Dispositif de commande de marche arrière selon la revendication 7, caractérisé en ce qu'il est associé à l'un des trois crabots (33, 35, 37) respectivement solidaires de trois axes coulissants (30, 31, 32) actionnant respectivement un premier baladeur (14) d'engagement des premier et second rapports de marche avant, second baladeur (15) d'engagement des troisième et quatrième rapport de marche avant, et un troisième baladeur (16), d'engagement du cinquième rapport de marche avant et de la marche arrière.
